# FASCICULE DE BREVET EUROPEEN

(11) **EP 3 814 293 B1**
(45) Date de publication et mention de la délivrance du brevet: **30.07.2025**
(21) Numéro de dépôt: 19745710.4
(22) Date de dépôt: 25.06.2019
(51) Int. Cl.: C04B 26/02, C04B 28/26, C04B 40/06, E04F 15/12, C04B 111/60

(54) **REVETEMENT DE SOL DE BATIMENT**
BODENBELAG EINES GEBÄUDES
FLOOR COVERING OF A BUILDING

(30) Priorité: 26.06.2018 FR 1855702
(43) Date de publication de la demande: 05.05.2021
(73) Titulaire: SAINT-GOBAIN WEBER, 94370 Sucy-en-Brie (FR)
(72) Inventeur: LEFEVRE, Xavier, 93190 LIVRY-GARGAN (FR); SALLIER, Yannick, 94130 NOGENT-SUR-MARNE (FR); FÜHRICH, Uwe, 79238 EHRENKIRCHEN (DE)
(74) Mandataire: Saint-Gobain Recherche
(86) Numéro de dépôt international: PCT/FR2019/051548
(87) Numéro de publication internationale: WO 2020/002816

(56) Documents cités:
- EP-A2- 0 875 539
- WO-A1-2016/113366
- DE-A1- 10 005 525

## Description

L'invention se rapporte au domaine des revêtements de sol de bâtiment, en particulier de sols intérieurs, notamment pour des sols de bâtiments à usage résidentiel, commercial, industriel ou tertiaire.

De manière générale on entend par revêtement de sol de bâtiment dans le présent texte un revêtement faisant partie d'un sol d'un bâtiment. Il s'agit le plus souvent de sols intérieurs (situés à l'intérieur du bâtiment), mais il peut aussi s'agir de sols extérieurs (faisant partie du bâtiment mais situés à l'extérieur de celui-ci, comme les sols de balcons ou de terrasses).

Les revêtements de sols, en particulier intérieurs, comprennent :
- les chapes, destinées à aplanir et niveler un support, par exemple un plancher en dalle de béton, elles-mêmes destinées à être revêtues d'une couche de finition,
- les couches de finition, visibles des occupants du logement, et qui doivent en outre présenter une esthétique adaptée ainsi qu'une bonne résistance à l'usure.

L'expression « revêtement de sol » a donc dans le présent texte une signification plus large que celle qui lui est donnée par la norme EN 13318, pour laquelle un revêtement de sol est une couche de finition.

Les revêtements de sol doivent répondre à des exigences fortes en termes de résistance mécanique (notamment en termes de résistance à la compression, à la flexion, à l'usure ou à l'impact), de manière à résister aux contraintes exercées par les personnes, les meubles etc...

Les chapes sont traditionnellement en mortier de ciment, comprenant un liant cimentaire et des granulats (notamment sables, voire fillers). Les couches de finition peuvent quant à elles être de nature très diverse, par exemple à base de bois, de matériaux céramiques, de textiles, de matières plastiques etc... Des couches de finition à base de mortier de ciment sont également proposées.

Les revêtements à base de mortier de ciment, aussi bien les chapes que les couches de finition, sont en général obtenus en gâchant un mortier pulvérulent sec de manière à obtenir une pâte, puis en déversant ladite pâte sur le support à revêtir. Les propriétés des mortiers étant très dépendantes de la quantité d'eau de gâchage ajoutée, la mise en œuvre de ces revêtements est délicate si bien qu'elle doit être réalisée par des professionnels spécialisés. Il existe donc un besoin de disposer de solutions prêtes à l'emploi, ne nécessitant pas d'ajout d'eau de gâchage.

La demande WO 2016/113366 décrit des revêtements de sol de ce type, présentant un durcissement relativement rapide, et obtenus à l'aide d'une dispersion aqueuse contenant un silicate alcalin, un liant polymérique et des charges minérales. Le produit est sous forme fluide et peut être déversé directement sur le support à revêtir, sans avoir à ajouter de l'eau.

Il apparaît toutefois un besoin de réduire encore les temps de durcissement, de manière à réduire le délai d'attente avant de pouvoir circuler sur le sol. Des délais inférieurs à 24h, voire 20h, sont en général exigés sur les chantiers. Il est important en revanche que le produit ne durcisse pas avant application ; le produit doit rester stable pendant plusieurs mois, typiquement 9 mois et plus.

A cet effet, l'invention a pour objet un revêtement de sol, notamment intérieur, de bâtiment, comprenant :
- une sous-couche comprenant un liant polymérique et au moins un accélérateur choisi parmi les sources de cations polyvalents et les acides faibles, et, au-dessus de ladite sous-couche et en contact direct avec elle,
- une surcouche ayant une épaisseur d'au moins 1 mm et comprenant des charges minérales liées par un silicate alcalin.

L'invention a aussi pour objet un procédé d'obtention d'un revêtement de sol selon l'invention, ledit procédé comprenant les étapes suivantes :
- une étape de dépôt sur un support horizontal d'une sous-couche comprenant un liant polymérique et au moins un accélérateur choisi parmi les sources de cations polyvalents et les acides faibles, puis
- une étape de dépôt sur et en contact avec ladite sous-couche, d'une surcouche ayant une épaisseur d'au moins 1 mm et comprenant des charges minérales liées par un silicate alcalin.

L'invention a encore pour objet un sol, notamment intérieur, d'un bâtiment comprenant un support horizontal tel qu'un plancher ou une chape, ledit support étant revêtu par un revêtement de sol selon l'invention.

L'invention a enfin pour objet un kit pour l'obtention d'un revêtement de sol selon l'invention, comprenant :
- un composant A comprenant une dispersion aqueuse d'un polymère organique et au moins un accélérateur choisi parmi les sources de cations polyvalents et les acides faibles, et
- un composant B comprenant des charges minérales et un silicate alcalin en solution aqueuse.

Les différentes caractéristiques préférées décrites ci-après s'appliquent aux différents objets de l'invention, selon toutes les combinaisons techniquement possibles.

Les inventeurs ont pu mettre en évidence que l'application d'une sous-couche comprenant un produit tel que décrit précédemment permettait d'accélérer le durcissement de la surcouche, alors même que cette dernière présente une épaisseur élevée, d'au moins 1 mm. Ce produit est donc appelé « accélérateur ».

### Surcouche et composant B

La surcouche possède une épaisseur d'au moins 1 mm et comprend des charges minérales liées par un silicate alcalin. A cet effet, le composant B du kit comprend des charges minérales et un silicate alcalin en solution aqueuse.

Le silicate alcalin est de préférence un silicate de lithium, de sodium, ou de potassium, ou un mélange de ces silicates. De manière très préférée, le silicate alcalin est un silicate de lithium, qui permet un bon étalement et une bonne maniabilité. La teneur pondérale totale en silicate alcalin dans la surcouche, respectivement dans le composant B du kit, est de préférence comprise dans un domaine allant de 1 à 30%, notamment de 2 à 20%, voire de 2 à 10%, par rapport au poids de la surcouche, respectivement par rapport au poids de l'extrait sec du composant B. Des teneurs trop élevées en silicate peuvent conduire à une fissuration du revêtement de sol lors du durcissement et du séchage.

Les charges minérales sont de préférence des sables et/ou des fillers. Il peut s'agir par exemple de composés silicatés (par exemple du sable de quartz) ou carbonatés (par exemple des fillers ou sables calcaires). La teneur pondérale en charges minérales dans la surcouche, respectivement dans le composant B du kit, est de préférence comprise dans un domaine allant de 20 à 99%, notamment de 30 à 95%, voire de 50 à 90%, par rapport au poids de la surcouche, respectivement par rapport au poids de l'extrait sec du composant B.

La surcouche comprend de préférence un polymère organique. A cet effet, le composant B du kit selon l'invention comprend dans ce cas une dispersion aqueuse d'un polymère organique, aussi appelée latex.

Avec le silicate alcalin, le polymère organique contribue à lier les charges minérales entre elles. Il améliore la souplesse et l'homogénéité du revêtement de sol, ainsi que ses propriétés mécaniques.

Le polymère organique est de préférence choisi parmi :
- les homopolymères, par exemple les vinylesters, les polyesters, les polyépoxydes, les polyamides,
- les copolymères obtenus par copolymérisation d'au moins deux monomères choisis parmi :
   o les ester vinyliques, par exemple l'acétate de vinyle, le butyrate de vinyle, le laurate de méthyle, l'hexanoate de vinyle-2-ethyle, l'acétate de 1-methylvinyle, le pivalate de vinyle,
   o l'acide acrylique ou méthacrylique et les esters ou amides de l'acide acrylique ou méthacrylique, comme l'acrylate de méthyle, le méthacrylate de méthyle, l'acrylate d'éthyle, l'acrylate d'éthylméthyle, l'acrylate de propyle, le méthacrylate de propyle, ou plus généralement les acrylates ou méthacrylates d'alkyles en C1-C9, l'acrylate d'hydroxyéthyle, le méthacrylate d'hydroxyéthyle etc...
   o les monomères vinyles aromatiques, comme le styrène, le méthylstyrène ou le vinyltoluène,
   o les oléfines, comme l'éthylène, le propylène, le 1,3-butadiène, l'isoprène,
   o les halogénures de vinyle, comme le chlorure de vinyle,
   o les acides maléique, fumarique, sulfoniques et leurs sels ou dérivés,
   o les monomères réticulants contenant au moins deux fonctions réactives, comme le diallylphtalate, l'adipate de divinyle, le maléate de diallyle, l'acide acrylomidoglycolique et ses dérivés, des acrylates fonctionnalisés epoxy.

De façon préférée, le polymère organique est un copolymère obtenu par polymérisation de styrène et d'un monomère acrylique, notamment choisi parmi l'acide acrylique ou méthacrylique et les acrylates ou méthacrylates d'alkyle en C1-C9.

La teneur pondérale totale en polymère organique dans la surcouche, respectivement dans le composant B du kit, est de préférence comprise dans un domaine allant de 0,5 à 30%, notamment de 1 à 20%, voire de 2 à 10%, par rapport au poids de la surcouche, respectivement par rapport au poids de l'extrait sec du composant B.

La somme des teneurs pondérales en silicate alcalin, charges minérales et polymère organique, dans la surcouche, respectivement dans le composant B du kit, est de préférence d'au moins 90%, notamment 95%, par rapport au poids de la surcouche, respectivement par rapport au poids de l'extrait sec du composant B.

La teneur pondérale en eau dans le composant B du kit est de préférence comprise dans un domaine allant de 5 à 40%. Si l'on souhaite que la surcouche soit autonivellante, cette teneur en eau est préférentiellement comprise dans un domaine allant de 10 à 40%, notamment de 15 à 30%.

La surcouche et/ou le composant B peuvent également comprendre d'autres additifs, par exemple des (super)plastifiants, des agents anti-mousse, des épaississants, des biocides, des dispersants, des agents mouillants, des pigments etc...

L'épaisseur de la surcouche est de préférence comprise dans un domaine allant de 2 à 10 mm, notamment de 3 à 8 mm, voire de 3 à 6 mm. Il s'agit de l'épaisseur après durcissement.

### Sous-couche et composant A

La sous-couche comprend un liant polymérique et au moins un accélérateur choisi parmi les sources de cations polyvalents et les acides faibles. A cet effet, le composant A du kit selon l'invention comprend une dispersion aqueuse d'un polymère organique et au moins un accélérateur choisi parmi les sources de cations polyvalents et les acides faibles.

Les sources de cations polyvalents comprennent de préférence des sels de cations polyvalents et/ou des oxydes de cations polyvalents. Les sources de cations polyvalents peuvent notamment être constituées de sels de cations polyvalents et/ou d'oxydes de cations polyvalents. Le terme « oxyde » englobe également les hydroxydes et les hydrates.

Le sel est de préférence soluble dans l'eau à température ambiante.

Les cations polyvalents sont de préférence des cations divalents ou trivalents, en particulier choisis parmi les ions calcium, magnésium, zinc, aluminium, baryum, cuivre. Les ions calcium et aluminium sont particulièrement préférés.

Les sels sont de préférence choisis parmi les halogénures, notamment les chlorures, les nitrates, les sulfates, les hydroxydes, les silicates et les carbonates.

Des sels de cations polyvalents préférés sont le chlorure de calcium, le nitrate de calcium, le chlorure d'aluminium, le sulfate d'aluminium, le nitrate d'aluminium, les silicates d'aluminium (comme par exemple le métakaolin) et le chlorure de zinc, seuls ou en mélange.

De préférence, l'accélérateur est un mélange d'au moins deux, voire trois, sels ou oxydes différents. On peut citer notamment le mélange de sels ou d'oxydes de calcium et d'aluminium, particulièrement le mélange de chlorure de calcium et de chlorure d'aluminium, le mélange de nitrate de calcium et de nitrate d'aluminium, le mélange d'oxyde de calcium et de sulfate d'aluminium, le mélange de silicates d'aluminium et de sulfate d'aluminium. Un accélérateur comprenant des oxydes de calcium est le ciment Portland.

Pour une plus grande efficacité, les sources de cations polyvalents peuvent également être associées dans la sous-couche ou dans le composant A à une source de sulfate, par exemple du sulfate de sodium.

L'acide faible est de préférence un acide organique, notamment un acide carboxylique. Il peut s'agir par exemple d'acide citrique ou d'acide acétique. De préférence, afin d'assurer une bonne compatibilité chimique avec le polymère en dispersion aqueuse et d'éviter une absorption par le support sur lequel sera déposée la sous-couche, l'acide faible est un polymère acide, notamment choisi parmi le poly(acide acrylique), le poly(acide méthacrylique), le poly(acide maléique), les copolymères formés par réaction entre des monomères acrylates et l'acide (méth)acrylique ou l'acide maléique.

La sous-couche ou le composant A peut comprendre un mélange d'au moins deux, voire trois, acides faibles.

La teneur pondérale totale en accélérateur dans la sous-couche, respectivement dans le composant A, va de préférence de 1 à 50%, notamment de 2 à 40%, voire de 3 à 30% par rapport au poids de la sous-couche, respectivement par rapport au poids de l'extrait sec du composant A. Lorsque l'accélérateur est un acide faible, cette teneur est de préférence comprise dans un domaine allant de 0,5 à 15%, notamment de 1 à 10%.

Le liant polymérique de la sous-couche ou le polymère en dispersion aqueuse du composant A du kit selon l'invention est de préférence un polymère organique choisi parmi :
- les homopolymères, par exemple les vinylesters, les polyesters, les polyépoxydes, les polyamides,
- les copolymères obtenus par copolymérisation d'au moins deux monomères choisis parmi :
   o les ester vinyliques, par exemple l'acétate de vinyle, le butyrate de vinyle, le laurate de méthyle, l'hexanoate de vinyle-2-ethyle, l'acétate de 1-methylvinyle, le pivalate de vinyle,
   o l'acide acrylique ou méthacrylique et les esters ou amides de l'acide acrylique ou méthacrylique, comme l'acrylate de méthyle, le méthacrylate de méthyle, l'acrylate d'éthyle, l'acrylate d'éthylméthyle, l'acrylate de propyle, le méthacrylate de propyle, ou plus généralement les acrylates ou méthacrylates d'alkyles en C1-C7, l'acrylate d'hydroxyéthyle, le méthacrylate d'hydroxyéthyle etc...
   ∘ les monomères vinyles aromatiques, comme le styrène, le méthylstyrène ou le vinyltoluène,
   ∘ les oléfines, comme l'éthylène, le propylène, le 1,3-butadiène, l'isoprène,
   ∘ les halogénures de vinyle, comme le chlorure de vinyle,
   ∘ les acides maléique, fumarique, sulfoniques et leurs sels ou dérivés,
   ∘ les monomères réticulants contenant au moins deux fonctions réactives, comme le diallylphtalate, l'adipate de divinyle, le maléate de diallyle, l'acide acrylomidoglycolique et ses dérivés, des acrylates fonctionnalisés epoxy

De façon préférée, le polymère organique est un copolymère obtenu par polymérisation d'acétate de vinyle, d'éthylène et d'ester vinylique.

La teneur pondérale en liant polymérique dans la sous-couche, respectivement dans le composant A, va de préférence de 1 à 70%, notamment de 2 à 50%, voire de 3 à 30% par rapport au poids de la sous-couche, respectivement par rapport au poids de l'extrait sec du composant A.

Selon un mode de réalisation, la sous-couche ou le composant A du kit contient des charges minérales. La présence de telles charges permet de mieux obturer les pores du support sur lequel la sous-couche est déposée. Les charges minérales sont de préférence des sables et/ou des fillers. Il peut s'agir par exemple de composés silicatés (par exemple du sable de quartz) ou carbonatés (par exemple des fillers ou sables calcaires). La sous-couche présente alors de préférence une épaisseur allant de 5 µm à 2 mm, notamment de 5 µm à 200 µm. La teneur pondérale en charges minérales dans la sous-couche, respectivement dans le composant A, va de préférence de 1 à 90%, notamment de 2 à 50%, voire de 3 à 30% par rapport au poids de la sous-couche, respectivement par rapport au poids de l'extrait sec du composant A. Dans ce mode de réalisation, la teneur pondérale en liant polymérique dans la sous-couche, respectivement dans le composant A, est de préférence comprise dans un domaine allant de 1 à 30%, notamment de 2 à 25%, voire de 3 à 20% par rapport au poids de la sous-couche, respectivement par rapport au poids de l'extrait sec du composant A.

Selon un autre mode de réalisation, la sous-couche ou le composant A du kit ne contient pas de charges minérales. La sous-couche présente alors de préférence une épaisseur allant de 0,5 à 200 µm, notamment de 5 à 100 µm. Dans ce mode de réalisation, la teneur pondérale en liant polymérique dans la sous-couche, respectivement dans le composant A, est de préférence comprise dans un domaine allant de 5 à 90%, notamment de 7 à 80%, voire de 10 à 70% par rapport au poids de la sous-couche, respectivement par rapport au poids de l'extrait sec du composant A.

Les épaisseurs sont données après durcissement.

La teneur en eau du composant A est de préférence comprise dans un domaine allant de 10 à 80%, notamment de 20 à 70%.

La somme des teneurs totales en liant polymérique, accélérateur et charges minérales dans la sous-couche, respectivement dans le composant A, est de préférence d'au moins 85%, notamment 90% et même 95%, par rapport au poids de la sous-couche, respectivement par rapport au poids de l'extrait sec du composant A.

Le revêtement de sol présente de préférence une force d'adhérence au sens de la norme EN 13892-8 d'au moins 0,8 N/mm², notamment d'au moins 1,0 N/mm² après trois jours de séchage à 20°C et 65% d'humidité relative.

Le revêtement de sol selon l'invention peut être une chape. Le revêtement est alors déposé typiquement sur un plancher en béton afin d'obtenir une parfaite planéité et de mettre le sol au niveau désiré. Le revêtement peut être en contact direct avec le plancher, ou séparé de ce dernier (cas d'une chape flottante) par une sous-couche d'isolation phonique, thermique ou d'étanchéité. Une couche de finition (par exemple un revêtement en matériau céramique, bois, textile, plastique, mais aussi un revêtement selon l'invention) est ensuite déposée sur la chape. Le sol intérieur du bâtiment comprend alors, depuis le plancher, une chape formée d'un revêtement de sol selon l'invention puis une couche de finition.

Le revêtement de sol selon l'invention peut encore être une couche de finition. Le revêtement est alors déposé directement sur une chape et constitue la partie visible du sol. Dans ce cas la surcouche peut contenir ou non des pigments selon l'aspect esthétique désiré. Il a été observé qu'en comparaison avec des couches à base de mortier de ciment, des teintes plus soutenues et plus vives pouvaient être obtenues. Le sol intérieur du bâtiment comprend alors, depuis le plancher, une chape (laquelle peut être un revêtement selon l'invention) puis une couche de finition formée d'un revêtement de sol selon l'invention.

Le revêtement de sol selon l'invention présentant une bonne résistance aux intempéries, il peut être utilisé dans un sol extérieur de bâtiment, notamment un sol de balcon ou de terrasse.

Le dépôt du revêtement peut être réalisé par les techniques connues pour l'application des revêtements de sol. La sous-couche est typiquement déposée au moyen d'une brosse, d'un rouleau ou d'un pinceau, ou encore par pulvérisation. La surcouche peut être déposée par exemple au moyen d'une spatule, d'un platoir flamand, d'une truelle ou d'une lisseuse.

Le kit selon l'invention peut comprendre deux récipients distincts contenant chacun un des composants A ou B. Le kit peut également comprendre un récipient comprenant deux compartiments distincts contenant chacun un des composants A ou B.

Les exemples qui suivent illustrent l'invention de manière non-limitative.

Dans les différents exemples qui suivent, une surcouche de 5 mm d'épaisseur a été déposée sur un support cimentaire, préalablement revêtu ou non d'une sous-couche.

La surcouche était formée à partir d'une composition aqueuse comprenant environ 10% en poids de dispersion aqueuse d'un copolymère de styrène et de monomère acrylique, 6,5% en poids d'un silicate de lithium, et des charges minérales (sables siliceux et calcaires).

Le temps de durcissement a ensuite été déterminé, soit qualitativement, en évaluant la pénétration d'une spatule métallique, soit quantitativement, en mesurant le module d'indentation. Ce dernier est mesuré en faisant pénétrer dans la surcouche sur une profondeur maximale de 0,5 à 1 mm une bille métallique de 0,8 cm de diamètre avec une vitesse de mise en charge de 300 N/min. Le module d'indentation correspond à la pente de la courbe de contrainte en fonction de la déformation.

Les exemples qui suivent illustrent l'invention de manière non-limitative.

### Exemple comparatif C1

Dans cet exemple comparatif, le support cimentaire n'a été revêtu d'aucune sous-couche.

Dans ce cas le module d'indentation est de 29 N/mm après 16h. La surcouche est suffisamment durcie au bout de 48 heures.

### Exemple comparatif C2

Dans cet exemple comparatif, le support cimentaire a été préalablement revêtu d'une sous-couche très fine constituée d'un liant polymérique (copolymère d'acétate de vinyle, d'éthylène et d'ester vinylique) et de charges minérales (sables). Cette sous-couche est déposée à partir d'une dispersion aqueuse du polymère contenant en outre des charges minérales.

La surcouche est suffisamment durcie au bout de 48 heures.

Les exemples selon l'invention qui suivent se distinguent de l'exemple comparatif C2 en ce que des accélérateurs ont été ajoutés à la composition de la sous-couche.

### Exemple 1

La sous-couche comprend les accélérateurs suivants : CaO (4,6% en poids) et Al₂(SO₄)₃ (4,6%). Elle comprend également du sulfate de sodium (Na₂SO₄) en une teneur de 2,9% en poids.

Le module d'indentation est de 109 N/mm après 16h et de 398 N/mm après 17h. La surcouche est suffisamment durcie au bout de 17 heures.

### Exemple 2

La sous-couche comprend les accélérateurs suivants : Al(NO₃)₃ (4,6% en poids) et Ca(NO₃)₂ (4,6%). Elle comprend également du sulfate de sodium (Na₂SO₄) en une teneur de 2,9% en poids.

Le module d'indentation est de 370 N/mm après 16h et de 471 N/mm après 17h. La surcouche est suffisamment durcie au bout de 16 heures.

### Exemple 3

La sous-couche comprend comme accélérateur du chlorure de zinc (22,5%).

Le module d'indentation est de 497 N/mm après 16h et de 578 N/mm après 17h. La surcouche est suffisamment durcie avant 16 heures.

### Exemple 4

La sous-couche comprend les accélérateurs suivants : AlCl₃ (4,6% en poids) et CaCl₂ (4,6%). Elle comprend également du sulfate de sodium (Na₂SO₄) en une teneur de 2,9% en poids.

La surcouche est suffisamment durcie au bout de 23h.

### Exemple 5

La sous-couche comprend les accélérateurs suivants : Al₂(SO₄)₃ (5,5% en poids) et métakaolin (16%).

La surcouche est suffisamment durcie au bout de 16h. Au bout de 19h, le module d'indentation est de 469 N/mm.

### Exemple 6

La sous-couche comprend comme accélérateur du nitrate de calcium (20%).

Le module d'indentation est de 108 N/mm après 16h.

### Exemple 7

La sous-couche comprend comme accélérateur du nitrate d'aluminium (20%).

Le module d'indentation est de 124 N/mm après 16h.

### Exemple 8

La sous-couche comprend comme accélérateur de l'acide polyacrylique, en des teneurs pondérales de 1, 5, 7 et 10%.

La surcouche est suffisamment durcie après 30h dans tous les cas.

### Exemple 9

La sous-couche comprend comme accélérateur du ciment Portland, en une teneur de 10%.

La surcouche est suffisamment durcie après 40h.

### Exemple 10

La sous-couche comprend comme accélérateur du métakaolin, en une teneur de 16%.

La surcouche est suffisamment durcie après 30h.

### Exemple 11

La sous-couche comprend comme accélérateur du sulfate d'aluminium, en une teneur de 5%.

La surcouche est suffisamment durcie après 30h.

## Revendications

1. Revêtement de sol, notamment intérieur, de bâtiment, comprenant :
- une sous-couche comprenant un liant polymérique et au moins un accélérateur choisi parmi les sources de cations polyvalents et les acides faibles, et, au-dessus de ladite sous-couche et en contact direct avec elle,
- une surcouche ayant une épaisseur d'au moins 1 mm et comprenant des charges minérales liées par un silicate alcalin.

2. Revêtement de sol selon la revendication précédente, dans lequel la surcouche comprend un polymère organique.

3. Revêtement de sol selon l'une des revendications précédentes, dans lequel les charges minérales sont des sables et/ou des fillers.

4. Revêtement de sol selon l'une des revendications précédentes, dans lequel les sources de cations polyvalents comprennent des sels de cations polyvalents et/ou des oxydes de cations polyvalents.

5. Revêtement de sol selon l'une des revendications précédentes, tel que les cations polyvalents sont des cations divalents ou trivalents, en particulier choisis parmi les ions calcium, magnésium, zinc, aluminium, baryum.

6. Revêtement de sol selon l'une des revendications précédentes, dans lequel l'acide faible est un acide organique, notamment un polymère acide.

7. Revêtement de sol selon l'une des revendications précédentes, tel que l'épaisseur de la surcouche est comprise dans un domaine allant de 2 à 10 mm.

8. Revêtement de sol selon l'une des revendications précédentes, tel que la sous-couche ne contient pas de charges minérales et présente une épaisseur allant de 0,5 à 200 µm, ou tel que la sous-couche contient des charges minérales et présente une épaisseur allant de 5 µm à 2 mm.

9. Revêtement de sol selon l'une des revendications précédentes, qui est une chape.

10. Revêtement de sol selon l'une des revendications 1 à 8, qui est une couche de finition, la surcouche pouvant contenir des pigments.

11. Procédé d'obtention d'un revêtement de sol selon l'une des revendications précédentes, ledit procédé comprenant les étapes suivantes :
- une étape de dépôt sur un support horizontal d'une sous-couche comprenant un liant polymérique et au moins un accélérateur choisi parmi les sources de cations polyvalents et les acides faibles, puis
- une étape de dépôt sur et en contact avec ladite sous-couche, d'une surcouche ayant une épaisseur d'au moins 1 mm et comprenant des charges minérales liées par un silicate alcalin.

12. Sol, notamment intérieur, d'un bâtiment comprenant un support horizontal tel qu'un plancher ou une chape, ledit support étant revêtu par un revêtement de sol selon l'une des revendications 1 à 10.

13. Kit pour l'obtention d'un revêtement de sol selon l'une des revendications 1 à 10, comprenant :
- un composant A comprenant une dispersion aqueuse d'un polymère organique et au moins un accélérateur choisi parmi les sources de cations polyvalents et les acides faibles, et
- un composant B comprenant des charges minérales et un silicate alcalin en solution aqueuse.

14. Kit selon la revendication précédente, dans lequel le composant B comprend une dispersion aqueuse d'un polymère organique.

## Patentansprüche

1. Bodenbelag, insbesondere im Innenbereich, für ein Gebäude, umfassend:
- eine Unterschicht, umfassend ein polymeres Bindemittel und mindestens einen Beschleuniger, der aus Quellen mehrwertiger Kationen und schwachen Säuren ausgewählt ist, und über der Unterschicht und in direktem Kontakt damit,
- eine Oberschicht, die eine Dicke von mindestens 1 mm aufweist und mineralische Füllstoffe umfasst, die durch ein Alkalisilikat gebunden sind.

2. Bodenbelag nach dem vorstehenden Anspruch, wobei die Oberschicht ein organisches Polymer umfasst.

3. Bodenbelag nach einem der vorstehenden Ansprüche, wobei die mineralische Füllstoffe Sande und/oder Füller sind.

4. Bodenbelag nach einem der vorstehenden Ansprüche, wobei die Quellen mehrwertiger Kationen mehrwertige Kationensalze und/oder mehrwertige Kationenoxide umfassen.

5. Bodenbelag nach einem der vorstehenden Ansprüche, wobei die mehrwertigen Kationen zweiwertige oder dreiwertige Kationen sind, besonders ausgewählt aus Calcium-, Magnesium-, Zink-, Aluminium- und Bariumionen.

6. Bodenbelag nach einem der vorstehenden Ansprüche, wobei die schwache Säure eine organische Säure, insbesondere ein saures Polymer ist.

7. Bodenbelag nach einem der vorstehenden Ansprüche, wobei die Dicke der Oberschicht in einem Bereich von 2 bis 10 mm umfasst ist.

8. Bodenbelag nach einem der vorstehenden Ansprüche, wobei die Unterschicht keine mineralischen Füllstoffe enthält und eine Dicke von 0,5 bis 200 µm aufweist oder wobei die Unterschicht mineralische Füllstoffe enthält und eine Dicke von 5 µm bis 2 mm aufweist.

9. Bodenbelag nach einem der vorstehenden Ansprüche, der ein Estrich ist.

10. Bodenbelag nach einem der Ansprüche 1 bis 8, der eine Deckschicht ist, wobei die Oberschicht Pigmente enthalten kann.

11. Verfahren zum Erhalten eines Bodenbelags nach einem der vorstehenden Ansprüche, das Verfahren umfassend die folgenden Schritte:
- einen Schritt zum Aufbringen einer Unterschicht, umfassend ein polymeres Bindemittel und mindestens einen Beschleuniger, der aus Quellen mehrwertiger Kationen und schwachen Säuren ausgewählt ist, auf einen horizontalen Träger, dann
- einen Schritt zum Aufbringen einer Oberschicht, die eine Dicke von mindestens 1 mm aufweist und mineralische Füllstoffe umfasst, die durch ein Alkalisilikat gebunden sind, auf und in Kontakt mit der Unterschicht.

12. Boden, insbesondere im Innenbereich, eines Gebäudes, umfassend einen horizontalen Träger wie einen Fußboden oder einen Estrich, wobei der Träger mit einem Bodenbelag gemäß einem der Ansprüche 1 bis 10 belegt ist.

13. Bausatz zum Erhalten eines Bodenbelags nach einem der Ansprüche 1 bis 10, umfassend:
- eine Komponente A, umfassend eine wässrige Dispersion eines organischen Polymers und mindestens einen Beschleuniger, der aus Quellen mehrwertiger Kationen und schwachen Säuren ausgewählt ist, und
- eine Komponente B, umfassend mineralische Füllstoffe und ein Alkalisilikat in wässriger Lösung.

14. Kit nach dem vorstehenden Anspruch, wobei Komponente B eine wässrige Dispersion eines organischen Polymers umfasst.

## Claims

1. A floor covering, in particular an internal one, for buildings, comprising:
- a sublayer comprising a polymeric binder and at least one accelerator chosen from sources of multivalent cations and weak acids, and, above said sublayer and in direct contact with it,
- a top layer at least 1 mm thick and comprising mineral filling material bound by an alkaline silicate.

2. The floor covering as claimed in the preceding claim, in which the top layer comprises an organic polymer.

3. The floor covering as claimed in one of the preceding claims, in which the mineral filling material is sand and/or fillers.

4. The floor covering as claimed in one of the preceding claims, in which the sources of multivalent cations comprise salts of multivalent cations and/or oxides of multivalent cations.

5. The floor covering as claimed in one of the preceding claims, such that the multivalent cations are divalent or trivalent cations, in particular chosen from calcium, magnesium, zinc, aluminum, or barium ions.

6. The floor covering as claimed in one of the preceding claims, in which the weak acid is an organic acid, in particular an acidic polymer.

7. The floor covering as claimed in one of the preceding claims, such that the thickness of the top layer lies within a range from 2 to 10 mm.

8. The floor covering as claimed in one of the preceding claims, such that the sublayer does not contain mineral filling material and has a thickness ranging from 0.5 to 200 µm, or such that the sublayer does contain mineral filling material and has a thickness ranging from 5 µm to 2 mm.

9. The floor covering as claimed in one of the preceding claims, which is a screed.

10. The floor covering as claimed in one of claims 1 to 8, which is a finishing layer, it being possible for the top layer to contain pigments.

11. A method for obtaining a floor covering as claimed in one of the preceding claims, said method comprising the following steps:
- a step in which a sublayer, comprising a polymeric binder and at least one accelerator chosen from sources of multivalent cations and weak acids, is laid on a horizontal substrate, and then
- a step in which a top layer, which is at least 1 mm thick and comprises mineral filling material bound by an alkaline silicate, is laid on and in contact with said sublayer.

12. A floor, in particular an internal one, of a building comprising a horizontal substrate such as a floor or a screed, said substrate being covered by a floor covering as claimed in one of claims 1 to 10.

13. A kit for obtaining a floor covering as claimed in one of claims 1 to 10, comprising:
- a component A comprising an aqueous dispersion of an organic polymer and at least one accelerator chosen from sources of multivalent cations and weak acids, and
- a component B comprising mineral filling material and an alkaline silicate in an aqueous solution.

14. The kit as claimed in the preceding claim, in which the component B comprises an aqueous dispersion of an organic polymer.
